# FASCICULE DE BREVET EUROPEEN

(11) **EP 3 480 120 B1**
(45) Date de publication et mention de la délivrance du brevet: **01.09.2021**
(21) Numéro de dépôt: 18204716.7
(22) Date de dépôt: 06.11.2018
(51) Int. Cl.: B64G 1/00, G05D 1/08, F41G 7/00

(54) **CALCULATEUR EMBARQUE DE GUIDAGE D'UN LANCEUR SPATIAL LE LONG D'UNE TRAJECTOIRE**
BORDRECHNER ZUM LENKEN EINER TRÄGERRAKETE ENTLANG EINER FLUGBAHN
ON-BOARD COMPUTER FOR GUIDING A SPACE LAUNCHER ALONG A TRAJECTORY

(43) Date de publication de la demande: 08.05.2019
(73) Titulaire: Centre National d'Etudes Spatiales, 75039 Paris Cedex 01 (FR)
(72) Inventeur: CARPENTIER, Benjamin, 75011 Paris (FR); BOURGEOIS, Eric, 94300 Vincennes (FR); DESMARIAUX, Jean, 78100 Saint Germain en Laye (FR)
(74) Mandataire: Delorme, Nicolas

(56) Documents cités:
- WO-A2-2008/039226
- FR-A1- 2 848 307
- US-A1- 2003 150 961
- US-A1- 2010 314 497

## Description

### DOMAINE TECHNIQUE GENERAL

L'invention concerne les systèmes et procédés de guidage d'un lanceur spatial au cours de la phase de montée atmosphérique par rapport à une trajectoire déterminée à l'avance sur laquelle le lanceur doit s'aligner.

### ETAT DE LA TECHNIQUE

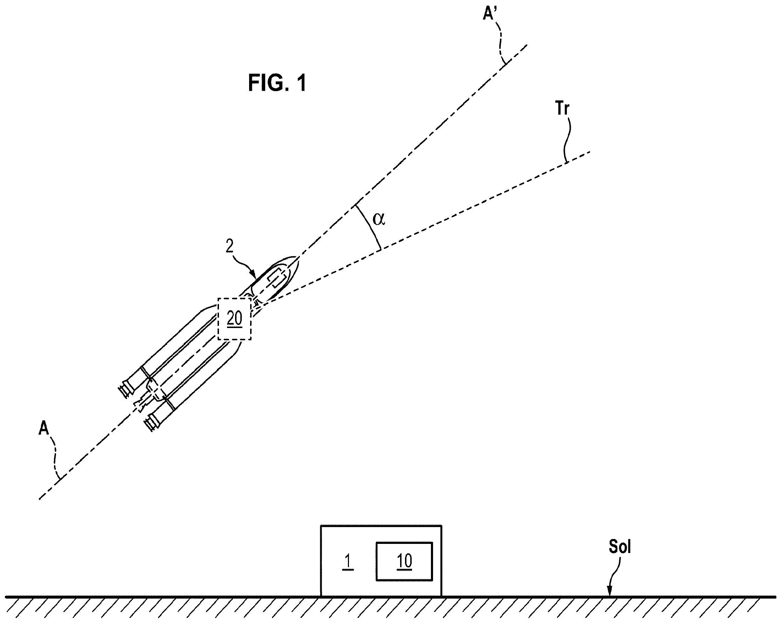

En relation avec la **figure 1**, au cours de la phase de montée atmosphérique, un lanceur 2 spatial suit une trajectoire Tr déterminée à l'avance. Cette trajectoire Tr est déterminée à l'avance afin d'annuler l'incidence *α* entre l'axe longitudinal du lanceur 2 et la trajectoire Tr et permet de générer une unique table de guidage. La table de guidage est alors embarquée dans une unité de calcul du lanceur 2.

Une telle table de guidage tient compte des caractéristiques nominales connues a priori du lanceur et de son environnement (aérologique en particulier) et comprend les paramètres d'attitudes auxquels le lanceur doit s'aligner et qui sont interpolés fonction d'un unique paramètre (temps ou vitesse).

En considérant, par exemple, une table de guidage comprenant l'attitude, et la vitesse, au cours du vol, la vitesse est estimée et l'on interpole à chaque instant du vol l'attitude en fonction de la vitesse. Cette valeur d'attitude est envoyée à la fonction pilotage qui réalise l'orientation du lanceur en conséquence.

Toutefois, un tel guidage, ne permet pas d'assurer la robustesse de la prise en compte des caractéristiques attendues du vent dans l'élaboration de la table de guidage face aux incertitudes de propulsion du lanceur. En effet, en cas de sur propulsion le lanceur peut par exemple monter en altitude plus rapidement que prévu. A une altitude donnée il va donc rencontrer du vent, et ce vent peut ne pas être cohérent de celui considéré pour calculer la table de guidage à ce même instant.

Par ailleurs, même dans le cas de l'absence de prise en compte de vent dans l'établissement de la table de guidage, la robustesse face aux incertitudes de propulsion n'est que partielle. En effet, en cas de sur propulsion le lanceur va par exemple subir une incidence résiduelle, qui générera des efforts dans les structures du lanceur.

Le document US 2003/150961 divulgue un système de propulsion pour un véhicule de lancement comprenant un dispositif de détection de la vitesse et de la direction du vent à des emplacements sélectionnés, un modèle d'installation dépendant de ces caractéristiques du vent et de l'état du lanceur pour prédire sa trajectoire, un circuit d'erreur sensible à la trajectoire prédite, et un système d'optimisation dépendant de cette erreur de trajectoire qui fournit des commandes de contrôle pour compenser la charge du vent.

### PRESENTATION DE L'INVENTION

L'invention propose de pallier au moins un de ces inconvénients.

A cet effet, l'invention propose un calculateur embarqué d'un lanceur spatial mettant en oeuvre un procédé de guidage le long d'une trajectoire, configuré pour déterminer, au cours du vol du lanceur, un premier paramètre de vol et un second paramètre de vol ; et à partir de tables de guidage fonction d'une trajectoire de vol atmosphérique du lanceur pour un profil d'incidence donnée pour un profil de vent connu a priori et au moins trois profils de propulsion, les tables de guidage comprenant pour plusieurs valeurs de consigne d'attitude tabulée, au moins un premier paramètre tabulé et un second paramètre tabulé, le premier paramètre tabulé représentant la même grandeur physique que le premier paramètre de vol, le second paramètre tabulé représentant la même grandeur physique que le second paramètre de vol : réaliser une double interpolation dans les tables de guidage : la première interpolation consistant à interpoler l'attitude en fonction du premier paramètre tabulé, la seconde interpolation consistant à interpoler les valeurs d'attitude obtenues en fonction du second paramètre tabulé.

L'invention est avantageusement complétée par les caractéristiques suivantes, prises seules ou en une quelconque de leur combinaison techniquement possible :
- elle comprend une fonction de détermination d'une consigne d'attitude de manière à ce qu'une manoeuvre, de préférence réalisée par le pilotage du lanceur, fonction de l'attitude cible permette au lanceur de suivre la trajectoire de vol prévue ;
- la première interpolation consiste à interpoler des tables d'attitudes et du second paramètre fonction de la mesure (ou l'estimation) du premier paramètre, et obtenir ainsi plusieurs (au moins 3) couples d'attitudes et de valeurs du second paramètre associées ;
- la seconde interpolation consiste à partir des valeurs d'attitude obtenues suite à la première interpolation (au moins 3), des valeurs du second paramètre associées, et de la mesure ou l'estimation du second paramètre en vol, à extraire une valeur d'attitude cible ;
- le premier paramètre de vol et le premier paramètre tabulé sont l'altitude ou une grandeur dépendant de l'altitude ;
- le second paramètre de vol et le second paramètre tabulé sont la vitesse ou une grandeur dépendant de la propulsion du lanceur ;
- la détermination du premier paramètre de vol et/ou du second paramètre de vol est obtenue par une mesure dudit paramètre ou par une estimation à partir de la mesure dudit paramètre.

L'invention concerne aussi un lanceur comprenant un calculateur selon l'invention.

Et l'invention concerne enfin un produit programme d'ordinateur comprenant des instructions de code de programme pour l'exécution des étapes du procédé selon l'invention, lorsque ce procédé est exécuté par au moins un processeur.

Les avantages de l'invention résident dans la génération des tables embarquées et dans la méthode d'interpolation : on choisit deux paramètres d'interpolation (au moins) qui permettront d'assurer la robustesse aux incertitudes de propulsion en vol, ainsi que la prise en compte du vent dans la consigne pour assurer l'incidence nulle (ou un profil prédéfini).

Ces deux paramètres sont de préférence l'altitude (ou un paramètre dépendant fortement de l'altitude) et la vitesse du lanceur (ou un paramètre dépendant fortement de la sur ou sous-propulsion du lanceur).

Les trois (ou plus) tables de consignes d'attitude (angles de cardan ou équivalent) définissant l'orientation du lanceur au cours du vol atmosphérique sont calculées au sol, en tenant compte :
- D'un profil de vent connu a priori (ou d'un profil de vent nul en l'absence d'information a priori) ;
- De caractéristiques de propulsion nominale et sur propulsive (respectivement sous-propulsive), englobant le domaine de vol qualifié du lanceur.

Ces tables sont ensuite embarquées (ainsi que les tables des paramètres d'interpolation associées).

En vol, à chaque instant la navigation fournit les mesures ou estimées des deux paramètres d'interpolation (par exemple altitude / vitesse). Le calculateur de bord du lanceur interpole les tables de consignes d'abord en fonction du premier paramètre (le paramètre dépendant de l'altitude ou l'altitude elle-même). Il obtient alors trois (ou plus) valeurs d'attitudes de consignes fonction de trois (ou plus) valeurs du second paramètre d'interpolation.

Puis il utilise la mesure ou l'estimée du second paramètre (la vitesse ou le paramètre dépendant de la vitesse) pour interpoler la consigne d'attitude parmi ces trois valeurs.

Pour éviter des problèmes d'interpolation, il est nécessaire d'attendre que le lanceur ait atteint une certaine altitude pour réaliser une telle double interpolation. En début de vol, pour les quelques premières secondes, on choisit une interpolation différente (non dépendante de l'altitude, par exemple : temps/vitesse). La transition des deux modes d'interpolation est assurée par l'atteinte d'un seuil (par exemple un seuil en altitude).

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre schématiquement le contexte du procédé de l'invention ;
- la figure 2 illustre schématiquement des étapes d'un procédé de guidage selon l'invention ;
- la figure 3 illustre en détail des étapes d'un procédé de guidage selon l'invention.

Sur l'ensemble des figures les éléments similaires portent des références identiques.

### DESCRIPTION DETAILLEE DE L'INVENTION

En relation avec **la** **figure 1**, un système de guidage est constitué d'une unité sol 1 comprenant une première unité 10 de calcul et d'une seconde unité 20 de calcul embarquée dans un lanceur 2 spatial.

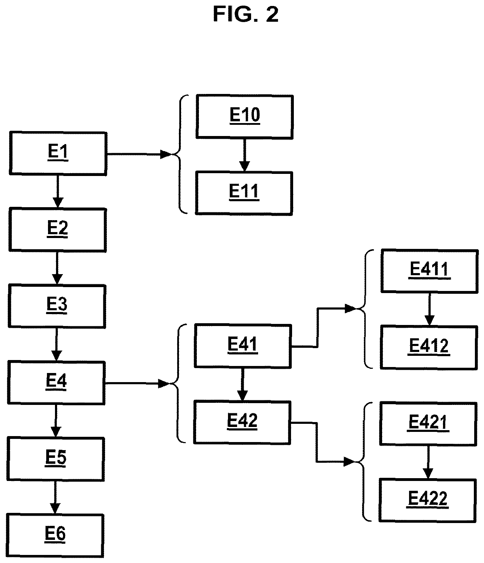

La première unité 10 de calcul de l'unité 1 sol est configurée pour déterminer des tables de guidage qui sont destinées à être embarquées dans l'unité 20 de calcul embarquée dans le lanceur configurée pour mettre en oeuvre un procédé de guidage qui sera décrit ci-après en relation avec la **figure 2**.

Les tables de guidage sont déterminées au sol avant le lancement du lanceur et envoyées à l'unité 20 de calcul du lanceur soit par une liaison physique (USB ou équivalent) ou soit par une liaison sans fil (type Bluetooth, wifi ou équivalent).

Un procédé de guidage comprend donc une partie mise en oeuvre par l'unité 10 de calcul de l'unité 1 sol et une partie mise en oeuvre par l'unité 20 de calcul du lanceur.

Dans une étape on génère E1 au sol, des tables de guidage, au moins trois. Une table de guidage peut correspondre à un cas de propulsion nominale du lanceur, une table de guidage peut correspondre à un cas de sur propulsion du lanceur, une table de guidage peut correspondre à un cas de sous propulsion du lanceur. D'autres cas intermédiaires peuvent aussi être envisagés. L'augmentation du nombre de tables de guidage améliorera la performance et la robustesse du guidage.

Pour ce faire, dans une sous-étape E10, on détermine au moins trois trajectoires de vol atmosphérique respectant un profil d'incidence donné, éventuellement nul à partir d'un profil Pv de vent connu a priori et à partir d'au moins trois lois Lps de propulsion nominale, sur propulsive, et sous-propulsive.

Le profil de vent peut être obtenu par l'intermédiaire d'un sondage de vent réalisé avant le lancement, ou d'un profil moyen statistique (par exemple saisonnier) associé à la connaissance de l'environnement de la base de lancement du lanceur.

Les lois de propulsions peuvent être obtenues par la prédiction calculée par le responsable du système de propulsion de l'engin spatial.

Puis dans une autre sous-étape E11 on détermine au moins trois tables Tab1, Tab2, Tab3 de guidage. Chaque table de guidage comprend au moins trois colonnes : une colonne correspondant à une consigne d'attitude, une colonne correspondant à un premier paramètre P1 (celui dépendant de l'altitude) et une autre colonne correspondant à un second paramètre P2 de vol (celui dépendant de la vitesse).

Le premier paramètre est de préférence l'altitude (ou équivalent), le second paramètre est de préférence la vitesse (ou équivalent). Par exemple, un capteur centrale inertielle donne une mesure de l'accélération non gravitationnelle du lanceur (l'accélération liée à toutes les forces subies par le lanceur sauf celle liée à la gravité). En intégrant cette mesure dans le temps, on obtient ce qu'on appelle la vitesse non gravitationnelle qui peut être un second paramètre P2 de vol.

Dans une étape E2, les tables de guidage sont chargées dans l'unité 20 de calcul du lanceur 2, cette dernière étant configurée pour recevoir ces tables.

Au cours du vol, dans une étape E3, on détermine un premier paramètre de vol Alt et un second paramètre de vol Vit.

Le premier paramètre de vol est par exemple l'altitude à laquelle se trouve lanceur et le second paramètre de vol est par exemple la vitesse du lanceur. Le premier et second paramètres sont soit directement mesurés E31 soit estimés E32 à partir de mesures.

Dans une étape E4, on procède à une double interpolation dans les tables de guidage.

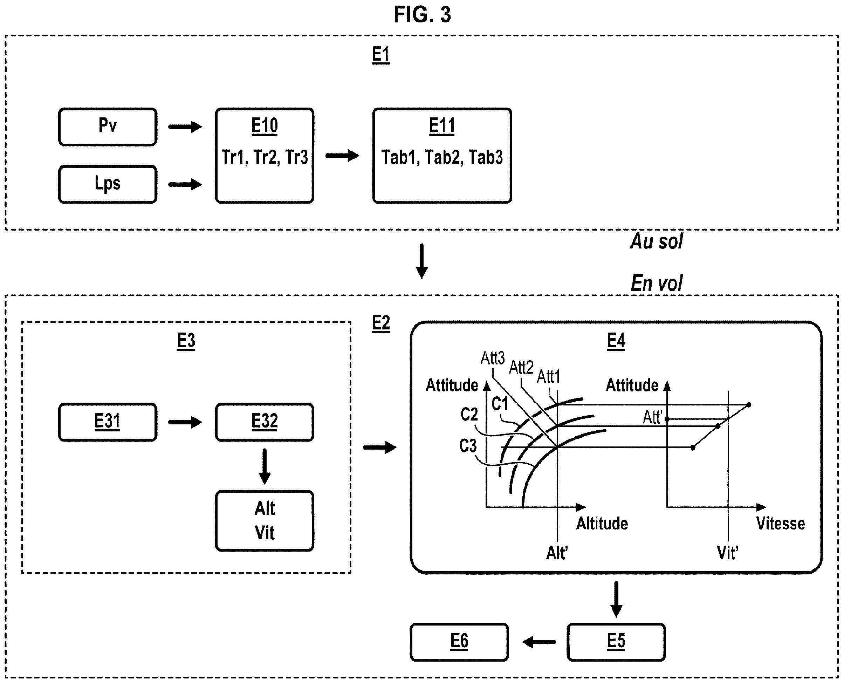

La première interpolation E41 consiste à interpoler l'attitude en fonction du premier paramètre tabulé (celui dépendant de l'altitude ou l'altitude elle-même) à partir des trois tables (ou plus) embarquées. On illustre en **figure 3** cette interpolation dans les tables par un réseau de courbes C1, C2, C3 (au moins trois courbes) de l'attitude en fonction du premier paramètre tabulé.

A partir de ces tables, (illustrées par le réseau de courbes C1, C2, C3), on extrait des valeurs d'attitudes Att1, Att2, Att3 qui correspondent au premier paramètre de vol (par exemple l'altitude Alt' mesurée ou estimée par la fonction navigation).

En particulier, dans une sous étape E411, cette interpolation consiste à extraire des tables de guidage les valeurs d'attitude et du second paramètre (vitesse ou paramètre dépendant de la propulsion) en fonction de l'altitude (ou du paramètre dépendant de l'altitude) et à procéder à l'interpolation.

Comme illustré sur la **figure 3**, trois courbes C1, C2, C3 par exemple sont obtenues (qui représentent les tables extraites). En effet, au cours de la sous-étape E411 cela revient à déterminer un réseau de courbes C1, C2, C3 de l'attitude en fonction du premier paramètre tabulé. Ces courbes sont obtenues en interpolant des valeurs de l'attitude en fonction du premier paramètre tabulé, l'altitude par exemple.

Dans une sous étape E412, à partir du premier paramètre de vol, l'altitude Alt', on obtient plusieurs valeurs d'attitude Att1, Att2, Att3.

La seconde interpolation E42 consiste à interpoler parmi les valeurs d'attitude Att1, Att2, Att3. Cela peut être illustré par une nouvelle courbe C, puis en extraire pour le second paramètre mesuré ou estimé en vol, une valeur d'attitude Att' cible.

En particulier, dans une sous-étape E421 à partir des valeurs d'attitude Att1, Att2, Att3, les valeurs du second paramètre tabulé, la vitesse (ou un paramètre dépendant fortement de la vitesse), par exemple, sont interpolées des tables de guidage (selon les mêmes étapes que E411 et E412). On obtient trois valeurs Vit1, Vit2, Vit3 associées à Att1, Att2, Att3.

Une interpolation des valeurs d'attitude en fonction de ce second paramètre tabulé est effectuée.

A partir de la valeur du seconde paramètre de vol, la vitesse Vit', la valeur d'attitude Att' est extraite.

Cette valeur d'attitude Att' obtenue, est la consigne envoyée (E5) par la fonction guidage vers la fonction pilotage qui réalise (E6) l'orientation du lanceur en conséquence pour suivre la trajectoire du lanceur.

Les interpolations mises en oeuvre sont du type linéaire. D'autres types d'interpolation sont bien entendu envisageables.

## Revendications

1. Calculateur embarqué d'un lanceur spatial mettant en œuvre un procédé de guidage le long d'une trajectoire, configuré pour effectuer les étapes suivantes du procédé:
- déterminer, au cours du vol du lanceur, un premier paramètre de vol (Alt') et un second paramètre de vol (Vit'); et
à partir de tables de guidage fonction d'une trajectoire de vol atmosphérique du lanceur pour un profil d'incidence donnée pour un profil de vent connu a priori et au moins trois profils de propulsion, les tables de guidage comprenant pour plusieurs valeurs de consigne d'attitude tabulée, au moins un premier paramètre tabulé et un second paramètre tabulé, le premier paramètre tabulé représentant la même grandeur physique que le premier paramètre de vol, le second paramètre tabulé représentant la même grandeur physique que le second paramètre de vol :
- réaliser (E4) une double interpolation dans les tables de guidage :
∘ la première (E41) interpolation consistant à interpoler l'attitude en fonction du premier paramètre tabulé,
∘ la seconde (E42) interpolation consistant à interpoler les valeurs d'attitude obtenues en fonction du second paramètre tabulé.

2. Calculateur embarqué selon la revendication 1, comprenant une fonction de détermination d'une consigne d'attitude de manière à ce qu'une manoeuvre, de préférence réalisée par le pilotage du lanceur, fonction de l'attitude cible permette au lanceur de suivre la trajectoire de vol prévue.

3. Calculateur embarqué selon l'une des revendications précédentes, dans lequel la première interpolation consiste à interpoler des tables d'attitudes et du second paramètre fonction de la mesure ou l'estimation du premier paramètre, et obtenir ainsi plusieurs, de préférence au moins trois, couples d'attitudes (Att1, Att2, Att3) et de valeurs du second paramètre associées.

4. Calculateur embarqué selon la revendication 3, dans lequel la seconde interpolation consiste à partir des valeurs d'attitude obtenues suite à la première interpolation, de préférence au moins trois, des valeurs du second paramètre associées, et de la mesure ou l'estimation du second paramètre en vol, à extraire une valeur d'attitude cible (Att').

5. Calculateur embarqué selon l'une des revendications précédentes, dans lequel le premier paramètre de vol et le premier paramètre tabulé sont l'altitude ou une grandeur dépendant de l'altitude.

6. Calculateur embarqué selon l'une des revendications précédentes, dans lequel le second paramètre de vol et le second paramètre tabulé sont la vitesse ou une grandeur dépendant de la propulsion du lanceur.

7. Calculateur embarqué selon l'une des revendications précédentes, dans lequel la détermination du premier paramètre de vol et/ou du second paramètre de vol est obtenue par une mesure dudit paramètre ou par une estimation à partir de la mesure dudit paramètre.

8. Lanceur comprenant un calculateur embarqué selon la revendication 7.

9. Produit programme d'ordinateur comprenant des instructions de code de programme pour l'exécution des étapes du procédé mis en œuvre par un calculateur embarqué selon l'une des revendications 1 à 7, lorsque ce procédé est exécuté par au moins un processeur.

## Patentansprüche

1. Bordrechner zum Lenken einer Trägerrakete entlang einer Flugbahn, konfiguriert, um die folgenden Verfahrensschritte auszuführen:
- Ermitteln eines ersten Flugparameters (Alt') und eines zweiten Flugparameters (Vit') während des Flugs der Trägerrakete; und
ausgehend von Funktionen von Lenkungstabellen einer Atmosphärenflugbahn der Trägerrakete für ein vorgegebenes Anstellwinkelprofil für ein von vornherein bekanntes Windprofil und mindestens drei Antriebsprofile, wobei die Lenkungstabellen für mehrere Einstellungsanweisungswerte tabuliert sind, zumindest ein erster tabulierter Parameter und ein zweiter tabulierter Parameter, wobei der erste tabulierte Parameter dieselbe physikalische Größe wie der erste Flugparameter aufweist, wobei der zweite tabulierte Parameter dieselbe physikalische Größe wie der zweite Flugparameter aufweist:
- Durchführung (E4) einer doppelten Interpolation in den Lenkungstabellen:
• Die erste (E41) Interpolation interpoliert die Einstellung gemäß dem ersten tabulierten Parameter.
• Die zweite (E42) Interpolation interpoliert die Einstellungswerte gemäß dem zweiten tabulierten Parameter.

2. Bordrechner nach Anspruch 1, umfassend eine Funktion zum Ermitteln einer Einstellungsanweisung, so dass ein Manöver, das vorzugsweise durch Steuern der Trägerrakete durchgeführt wird, die Funktion der Zieleinstellung der Trägerrakete ermöglicht, um der geplanten Flugbahn zu folgen.

3. Bordrechner nach einem der vorhergehenden Ansprüche, bei dem die erste Interpolation daraus besteht, die Einstellungstabellen zu interpolieren und dem zweiten Parameter, gemäß der Messfunktion oder der Schätzung des ersten Parameters, um mehrere, vorzugsweise mindestens drei, Einstellungspaare (Att1, Att2, Att3) zu erhalten und die Werte des zweiten assoziierten Parameters.

4. Bordrechner nach Anspruch 3, wobei die zweite Interpolation aus den Einstellungswerten besteht, die aus der ersten Interpolation hervorgegangen sind, vorzugsweise mindestens drei, der Werte des zweiten assoziierten Parameters, und der Messung oder Schätzung des zweiten Flugparameters, aus dem ein Zieleinstellungswert zu extrahieren ist (Att').

5. Bordrechner nach einem der vorhergehenden Ansprüche, bei dem der erste Flugparameter und der erste tabulierte Parameter die Höhe oder eine von der Höhe abhängige Größe sind.

6. Bordrechner nach einem der vorhergehenden Ansprüche, bei dem der zweite Flugparameter und der zweite tabulierte Parameter die Geschwindigkeit oder eine vom Antrieb der Trägerrakete abhängige Größe sind.

7. Bordrechner nach einem der vorhergehenden Ansprüche, bei dem die Ermittlung des ersten Flugparameters und/oder des zweiten Flugparameters durch eine Messung dieses Parameters erhalten wird oder durch eine Schätzungsmessung dieses Parameters.

8. Trägerrakete umfassend einen Bordrechner nach Anspruch 7.

9. Computerprogrammprodukt umfassend Programmcodebefehle zur Ausführung der Verfahrensschritte, die durch einen Bordrechner ausgegeben werden, nach einem der Ansprüche 1 bis 7, wenn dieses Verfahren von mindestens einem Prozessor ausgeführt wird.

## Claims

1. An on-board computer of a space launch vehicle implementing a method for guidance along a path, configured to perform the following steps of the method:
- determining, during the flight of the launching vehicle, a first flight parameter (Alt') and a second flight parameter (Vlt'); and
from guidance tables depending on an atmospheric flight path of the launch vehicle for a given incidence profile for a wind profile known beforehand and at least three propulsion profiles, the guidance tables comprising for several tabulated attitude setpoint values, at least one first tabulated parameter and one second tabulated parameter, the first tabulated parameter representing the same physical quantity as the first flight parameter, the second tabulated parameter representing the same physical quantity as the second flight parameter:
- carrying out (E4) a double interpolation in the guidance tables:
∘ the first (E41) interpolation consisting in interpolating the attitude depending on the first tabulated parameter,
∘ the second (E42) interpolation consisting in interpolating the attitude values obtained depending on the second tabulated parameter.

2. The on-board computer according to claim 1, comprising a function for determining an attitude setpoint so that a maneuver, preferably carried out by piloting of the launch vehicle, depending on the target attitude enables the launch vehicle to follow the expected flight path.

3. The on-board computer according to any of the preceding claims, wherein the first interpolation consists in interpolating tables of attitudes and of the second parameter depending on the measurement or the estimation of the first parameter, and thus obtaining several, preferably at least three, pairs of attitudes (Att1, Att2, Att3) and associated values of the second parameter.

4. The on-board computer according to claim 3, wherein the second interpolation consists in starting from the attitude values obtained following the first interpolation, preferably at least three, from the associated values of the second parameter, and from the measurement or the estimation of the second parameter in flight, extracting a target attitude value (Att').

5. The on-board computer according to any of the preceding claims, wherein the first flight parameter and the first tabulated parameter are the altitude or a quantity dependent of the altitude.

6. The on-board computer according to any of the preceding claims, wherein the second flight parameter and the second tabulated parameter are the speed or a quantity dependent of the propulsion of the launch vehicle.

7. The on-board computer according to any of the preceding claims, wherein the determination of the first flight parameter and/or of the second flight parameter is obtained by a measurement of said parameter or by an estimation from the measurement of said parameter.

8. A launch vehicle comprising an on-board computer according to claim 7.

9. A computer program product comprising program code instructions for executing the steps of the method implemented by an on-board computer according to any of claims 1 to 7, when this method is executed by at least one processor.
